# EUROPÄISCHE PATENTANMELDUNG

(11) **EP 4 821 763 A1**
(43) Veröffentlichungstag der Anmeldung: **14.10.2026**
(21) Anmeldenummer: 26155763.1
(22) Anmeldetag: 02.02.2026
(51) Int. Cl.: B60R 9/045, B60R 9/052, B60R 9/058

(54) **BEFESTIGUNGSVORRICHTUNG ZUM BEFESTIGEN EINES TRÄGERPROFILS AN EINEM DACHRELINGPROFIL EINES KRAFTFAHRZEUGS**

(30) Priorität: 09.04.2025 DE 102025113926
(71) Anmelder: ATERA GmbH, 88299 Leutkirch im Allgäu (DE)
(72) Erfinder: Capriles Tovar, Maria Fernanda, 88339 Bad Waldsee (DE); Schmidt, Maximilian, 87764 Legau (DE); Sang, Johannes, 55278 Undenheim (DE)
(74) Vertreter: Patentanwälte Ruff, Wilhelm, Beier, Dauster & Partner mbB

(57) **Zusammenfassung**

1. Die Erfindung betrifft eine Befestigungsvorrichtung zum Befestigen eines Trägerprofils an einem Dachrelingprofil eines Kraftfahrzeugs, aufweisend eine erste Klemmbacke und eine zweite Klemmbacke, die zur Anlage an gegenüberliegenden Längsseiten des Dachrelingprofils eingerichtet und zueinander relativbeweglich sind zwischen einer Klemmstellung, in der die Klemmbacken zum Ausbilden einer Klemmverbindung mit dem Dachrelingprofil aufeinander zubewegt sind, und einer Freigabestellung, in der die Klemmbacken zum Aufheben der Klemmverbindung voneinander wegbewegt sind, eine Stelleinrichtung, mittels derer die Klemmbacken zwischen der Klemmstellung und der Freigabestellung verlagerbar sind, und einen Grundkörper, der mit dem Trägerprofil verbindbar ist und an welchem die Klemmbacken gelagert sind, ist bekannt.
2.1 Erfindungsgemäß sind die erste Klemmbacke und die zweite Klemmbacke um eine gemeinsame erste Schwenkachse relativ zu dem Grundkörper schwenkbeweglich an dem Grundkörper gelagert, wobei die erste Schwenkachse in einem an dem Dachrelingprofil befestigten Zustand entlang einer Längsachse des Dachrelingprofils orientiert ist.
2.2 Verwendung an einem Kraftfahrzeug

## Beschreibung

Die Erfindung betrifft eine Befestigungsvorrichtung zum Befestigen eines Trägerprofils an einem Dachrelingprofil eines Kraftfahrzeugs, aufweisend eine erste Klemmbacke und eine zweite Klemmbacke, die zur Anlage an gegenüberliegenden Längsseiten des Dachrelingprofils eingerichtet und zueinander relativbeweglich sind zwischen einer Klemmstellung, in der die Klemmbacken zum Ausbilden einer Klemmverbindung mit dem Dachrelingprofil aufeinander zubewegt sind, und einer Freigabestellung, in der die Klemmbacken zum Aufheben der Klemmverbindung voneinander wegbewegt sind, eine Stelleinrichtung, mittels derer die Klemmbacken zwischen der Klemmstellung und der Freigabestellung verlagerbar sind, und einen Grundkörper, der mit dem Trägerprofil verbindbar ist und an welchem die Klemmbacken gelagert sind.

Eine derartige Befestigungsvorrichtung ist aus der EP 2 995 502 A1 bekannt. Die bekannte Befestigungsvorrichtung ist als Stützfuß ausgeführt und weist einen Grundkörper in Form eines Stützkörpers auf. An dem Stützkörper sind eine erste innere Klemmbacke und eine zweite äußere Klemmbacke gelagert. Zwecks Verlagerung zwischen der Klemmstellung und der Freigabestellung ist die innere erste Klemmbacke parallel zu einer Längsachse des Trägerprofils linearbeweglich an dem Stützkörper gelagert. Die äußere zweite Klemmbacke ist relativ zu dem Stützkörper in Hochrichtung verlagerbar.

Aufgabe der Erfindung ist es, eine Befestigungsvorrichtung der eingangs genannten Art bereitzustellen, die Vorteile gegenüber dem Stand der Technik bietet. Im Speziellen sollen ungewollte Lastmomente an dem Dachrelingprofil vermieden und eine vereinfachte Montage am Kraftfahrzeug ermöglicht werden.

Diese Aufgabe wird dadurch gelöst, dass die erste Klemmbacke und die zweite Klemmbacke um eine gemeinsame erste Schwenkachse relativ zu dem Grundkörper schwenkbeweglich an dem Grundkörper gelagert sind, wobei die erste Schwenkachse in einem an dem Dachrelingprofil befestigten Zustand entlang einer Längsachse des Dachrelingprofils orientiert ist. Durch die schwenkbewegliche Lagerung der Klemmbacken in Relation zu dem Grundkörper und die erfindungsgemäße Orientierung der ersten Schwenkachse wird vermieden, dass die Klemmbacken in der Klemmstellung ungewollte, um die Längsachse des Dachrelingprofils wirkende Lastmomente in das Dachrelingprofil einleiten. Solche Längsmomente können zu Beschädigungen des Dachrelingprofils führen. Durch die relative Schwenkbeweglichkeit zwischen Grundkörper einerseits und den beiden Klemmbacken andererseits werden solche Lastmomente vermieden. Zudem erlaubt die erfindungsgemäße Lösung eine vereinfachte Montage durch den Benutzer. Denn durch die schwenkbewegliche Lagerung der Klemmbacken an dem Grundkörper kann die Befestigungsvorrichtung zunächst durch Ausbilden der Klemmverbindung mit dem Dachrelingprofil verbunden werden. Das bei der Montage üblicherweise bereits mit der Befestigungsvorrichtung, im Speziellen dem Grundkörper, verbundene Trägerprofil verbleibt in diesem Zustand um die erste Schwenkachse schwenkbeweglich in Relation zu dem Dachrelingprofil. Hierdurch kann ein der bereits befestigten Befestigungsvorrichtung abgewandtes Ende des Trägerprofils auf vereinfachte Weise positioniert und mit einer weiteren Befestigungsvorrichtung an einem weiteren Dachrelingprofil befestigt werden. Überdies erlaubt die Schwenkbeweglichkeit um die Schwenkachse einen Toleranzausgleich in Bezug auf einen Abstand zwischen den beiden Dachrelingprofilen. Außerdem erlaubt die gemeinsam schwenkbewegliche Lagerung der beiden Klemmbacken eine verbesserte Anpassung an geometrisch unterschiedliche Dachrelingprofile. In fahrzeugseitig montiertem Zustand ist das Trägerprofil vorzugsweise entlang einer Querachse des Kraftfahrzeugs längserstreckt. Die Längsachse des Dachrelingprofils ist vorzugsweise parallel zur Längsachse des Kraftfahrzeugs. Die erste Schwenkachse ist entlang, vorzugsweise parallel, zu der Längsachse des Dachrelingprofils und damit auch der Längsachse des Kraftfahrzeugs erstreckt. Die Verlagerung der Klemmbacken zwischen der Klemmstellung und der Freigabestellung erfolgt bei unterschiedlichen Ausgestaltungen auf unterschiedliche Weise, beispielsweise translatorisch, rotatorisch und/oder schwenkbeweglich. Die Stelleinrichtung zum Verlagern der Klemmbacken zwischen der Klemmstellung und der Freigabestellung kann auf jede für den vorliegenden Zweck geeignete Weise gestaltet sein, beispielsweise als Hebelmechanismus, Schraubmechanismus oder dergleichen. Der Grundkörper ist mit dem Trägerprofil lösbar verbindbar, beispielsweise mittels einer Klemm-, Schraub- oder sonstigen Verbindung. Bei einer Ausgestaltung ist die erste Klemmbacke um die erste Schwenkachse schwenkbeweglich unmittelbar an dem Grundkörper gelagert und die zweite Klemmbacke ist zwecks Verlagerung zwischen der Klemmstellung und der Freigabestellung relativ zu der ersten Klemmbacke beweglich unmittelbar an der ersten Klemmbacke gelagert. Bei einer weiteren Ausgestaltung ist eine hierzu umgekehrte Lagerung vorgesehen. Bei einer weiteren Ausgestaltung sind die erste Klemmbacke und die zweite Klemmbacke jeweils um die erste Schwenkachse schwenkbeweglich unmittelbar an dem Grundkörper gelagert.

In Ausgestaltung der Erfindung beträgt die Schwenkbeweglichkeit der Klemmbacken um die erste Schwenkachse wenigstens ± 5°, bevorzugt wenigstens ± 10°, besonders bevorzugt wenigstens ± 15°. Die Schwenkbeweglichkeit kann durch einen Anschlag begrenzt werden, der beispielsweise an der ersten Klemmbacke, der zweiten Klemmbacke und/oder dem Grundkörper ausgebildet ist. Alternativ oder zusätzlich kann die Befestigungsvorrichtung mit einem Gehäuse versehen sein, das einen Abschnitt aufweist, das als Anschlag für die Schwenkbeweglichkeit der beiden Klemmbacken um die erste Schwenkachse fungiert.

In weiterer Ausgestaltung der Erfindung ist die zweite Klemmbacke zwecks Verlagerung zwischen der Klemmstellung und der Freigabestellung um eine zweite Schwenkachse, die parallel zu der ersten Schwenkachse ist, relativ zu der ersten Klemmbacke schwenkbeweglich an der ersten Klemmbacke gelagert, und die erste Klemmbacke ist gemeinsam mit der an ihr gelagerten zweiten Klemmbacke um die erste Schwenkachse relativ zu dem Grundkörper schwenkbeweglich an dem Grundkörper gelagert. Bei dieser Ausgestaltung der Erfindung ist die zweite Klemmbacke relativ zu der ersten Klemmbacke um die zweite Schwenkachse schwenkbeweglich, um ein Überführen der beiden Klemmbacken zwischen der Klemmstellung und der Freigabestellung zu ermöglichen. Zudem sind wiederum beide Klemmbacken um die erste Schwenkachse relativ zu dem Grundkörper schwenkbeweglich (und umgekehrt). Die erste Schwenkachse und die zweite Schwenkachse sind parallel. Diese Ausgestaltung erlaubt einen besonders einfachen Aufbau.

In weiterer Ausgestaltung der Erfindung ist die zweite Schwenkachse in radialer Richtung der ersten Schwenkachse in einem Radialabstand zu der ersten Schwenkachse angeordnet, wobei eine Einstelleinrichtung zum wahlweisen Einstellen des Radialabstands vorhanden ist. Durch die Einstelleinrichtung kann der Radialabstand zwischen der ersten Schwenkachse und der zweiten Schwenkachse durch den Benutzer wahlweise eingestellt werden. Diese Einstellung erlaubt eine verbesserte Anpassung der Beweglichkeit der Klemmbacken an unterschiedliche Dachrelingprofile mit unterschiedlichen Geometrien. Mit anderen Worten: Durch die wahlweise Einstellbarkeit des Radialabstands können die sich ergebende Kinematik der Klemmbacken, deren Anlagepositionen an den Längsseiten des Dachrelingprofils und/oder sich ergebende mechanische Hebelarme angepasst werden. Die Einstelleinrichtung kann auf jede für den vorliegenden Zweck geeignete Weise gestaltet sein.

In weiterer Ausgestaltung der Erfindung weist die Einstelleinrichtung mehrere Lagerstellen auf, die in unterschiedlichen Radialabständen von der ersten Schwenkachse an der ersten Klemmbacke und/oder der zweiten Klemmbacke angeordnet und jeweils eingerichtet sind zur wahlweisen Schwenklagerung der zweiten Klemmbacke um die zweite Schwenkachse. Dies ist eine besonders einfache und damit kostengünstig herstellbare Ausgestaltung der Einstelleinrichtung. Bei einer Ausgestaltung sind die Lagerstellen jeweils als Bohrung oder Bohrungspaar gestaltet. Die Bohrung bzw. das Bohrungspaar ist zur Aufnahme einer Lagerachse oder eines sonstigen Maschinenelements zur schwenkbeweglichen Lagerung eingerichtet. Bei einer Ausgestaltung ist wenigstens eine der mehreren Lagerstellen an der ersten Klemmbacke ausgebildet. Alternativ oder zusätzlich ist wenigstens eine der mehreren Lagerstellen an der zweiten Klemmbacke ausgebildet.

In weiterer Ausgestaltung der Erfindung weist die Befestigungsvorrichtung einen Klemmhebel auf, der um eine dritte Schwenkachse relativ zu dem Grundkörper schwenkbeweglich an dem Grundkörper gelagert ist, wobei die dritte Schwenkachse parallel zu der ersten Schwenkachse ist, und wobei der Klemmhebel mittels der Stelleinrichtung um die dritte Schwenkachse schwenkbeweglich ist, um eine Klemmverbindung mit dem Trägerprofil auszubilden. Der Klemmhebel dient der lösbaren Verbindung der Befestigungsvorrichtung, im Speziellen des Grundkörpers, mit dem Trägerprofil. Zu diesem Zweck ist der Klemmhebel um die besagte dritte Schwenkachse relativ zu dem Grundkörper schwenkbeweglich, wobei der Klemmhebel mittels der Stelleinrichtung um die dritte Schwenkachse verlagerbar ist. Die Stelleinrichtung hat bei dieser Ausgestaltung folglich eine Mehrfachfunktion. Zum einen dient die Stelleinrichtung der Verlagerung der Klemmbacken zwischen der Klemmstellung und der Freigabestellung. Zum anderen dient die Stelleinrichtung zusätzlich der Verlagerung des Klemmhebels zwecks Ausbildung der Klemmverbindung mit dem Trägerprofil. Durch diese Mehrfachfunktion kann auf eine gesonderte Stelleinrichtung zur Verlagerung des Klemmhebels verzichtet werden, was einen vereinfachten Aufbau der Befestigungsvorrichtung erlaubt.

In weiterer Ausgestaltung der Erfindung weist der Klemmhebel einen Kopfabschnitt auf, der in einem mit dem Trägerprofil verbundenen Zustand in einen Hohlprofilquerschnitt des Trägerprofils eingreift und mittels einer Schwenkbewegung des Klemmhebels um die dritte Schwenkachse gegen eine Innenbodenfläche des Trägerprofils gepresst ist, um die Klemmverbindung mit dem Trägerprofil auszubilden. Der Kopfabschnitt wirkt zum Ausbilden der Klemmverbindung mit der Innenbodenfläche des Trägerprofils zusammen. Das Trägerprofil weist vorzugsweise eine in den Hohlprofilquerschnitt reichende Ausnehmung auf, durch welche der Klemmhebel in das Trägerprofil eingreift. Das Trägerprofil wird bei dieser Ausgestaltung in Hochrichtung auf den Grundkörper gedrückt, indem der Kopfabschnitt von oben nach unten gegen die Innenbodenfläche gepresst wird.

In weiterer Ausgestaltung der Erfindung weist die Stelleinrichtung eine Spannschraube auf, die an der zweiten Klemmbacke abgestützt ist und mit einer Gewindemutter zusammenwirkt, um die zweite Klemmbacke um die zweite Schwenkachse relativ zu der ersten Klemmbacke zu verlagern und um Klemmkräfte zum Ausbilden der Klemmverbindung mit dem Dachrelingprofil zu erzeugen. Bei dieser Ausgestaltung werden die Klemmbacken in die Klemmstellung verlagert, indem die Spannschraube angezogen wird. Durch das Anziehen der Spannschraube werden die beiden Klemmbacken aufeinander zubewegt, indem die zweite Klemmbacke relativ zu der ersten Klemmbacke um die zweite Schwenkachse verschwenkt wird. Bei einer Ausgestaltung ist die Gewindemutter relativ zu der ersten Klemmbacke in Axialrichtung der Spannschraube feststehend und zu diesem Zweck an der ersten Klemmbacke gelagert. Bei einer weiteren Ausgestaltung ist die Gewindemutter an dem Grundkörper gelagert. Bei Ausgestaltungen mit Klemmhebel kann die Gewindemutter auch an dem Klemmhebel gelagert sein.

In weiterer Ausgestaltung der Erfindung ist die Gewindemutter an dem Klemmhebel festgelegt, insbesondere an einem Fußabschnitt des Klemmhebels, wodurch zum Ausbilden der Klemmverbindung mit dem Trägerprofil erforderliche Klemmkräfte mittels der Spannschraube erzeugbar sind. Zum Ausbilden der Klemmverbindung mit dem Trägerprofil wird bei dieser Ausgestaltung der Erfindung die Spannschraube angezogen. Durch das Anziehen der Spannschraube wird der Klemmhebel relativ zu dem Grundkörper um die dritte Achse verschwenkt, wodurch der Kopfabschnitt in Hochrichtung von oben nach unten gegen die Innenbodenfläche des Trägerprofils gepresst wird. Gleichzeitig bewirkt das Anziehen der Spannschraube eine Verlagerung der zweiten Klemmbacke um die zweite Schwenkachse relativ zu der ersten Klemmbacke, d. h. eine Verlagerung der Klemmbacken in Richtung der Klemmstellung. Umgekehrt können die beiden Klemmverbindungen gelöst werden, indem die Spannschraube gelöst wird. Der Fußabschnitt des Klemmhebels ist dem Kopfabschnitt in Längsrichtung des Klemmhebels abgewandt.

In weiterer Ausgestaltung der Erfindung weist die Befestigungsvorrichtung wenigstens ein erstes Federelement und wenigstens ein zweites Federelement auf. Die Klemmbacken sind mittels des wenigstens einen ersten Federelements in Richtung der Freigabestellung vorgespannt. Der Klemmhebel ist mittels des wenigstens einen zweiten Federelements um die dritte Schwenkachse in Richtung einer von dem Trägerprofil gelösten Freigabestellung vorgespannt. Durch das wenigstens eine erste Federelement und das wenigstens eine zweite Federelement kann eine verbesserte Ergonomie bei der Montage am Kraftfahrzeug erreicht werden. Die verbesserte Ergonomie wird zum einen dadurch erreicht, dass die Klemmbacken mittels des wenigstens einen ersten Federelements in die Freigabestellung vorgespannt sind. Hierdurch können die Klemmbacken in verbesserter Weise an dem Dachrelingprofil positioniert werden, bevor die Klemmverbindung ausgebildet wird. Zur verbesserten Ergonomie trägt zudem bei, dass der Klemmhebel mittels des wenigstens einen zweiten Federelements in die von dem Trägerprofil gelöste Freigabestellung vorgespannt ist. Hierdurch kann die Befestigungsvorrichtung in vereinfachter Weise relativ zu dem Trägerprofil positioniert werden, bevor die Klemmverbindung mit dem Trägerprofil ausgebildet wird. Bei einer Ausgestaltung ist das wenigstens eine erste Federelement eine Druckfeder, vorzugsweise eine auf Druck wirkende Wendelfeder. Bei einer Ausgestaltung ist das wenigstens eine zweite Federelement eine Zugfeder, vorzugsweise eine auf Zug wirkende Wendelfeder. Sofern die Befestigungsvorrichtung eine Spannschraube aufweist, ist das wenigstens eine erste Federelement vorzugsweise koaxial zu der Spannschraube auf deren Außenumfang angeordnet. Das wenigstens eine zweite Federelement ist vorzugsweise einends mit dem Grundkörper und andernends mit dem Klemmhebel verbunden.

In weiterer Ausgestaltung der Erfindung ist das wenigstens eine zweite Federelement dazu eingerichtet, den Klemmhebel entgegen der Einwirkung der Spannschraube in der Freigabestellung zu halten, während die Klemmbacken mittels der Spannschraube in Richtung der Klemmstellung verlagert werden. Hierdurch kann eine nochmals vereinfachte Montage erreicht werden Denn durch die spezielle Einrichtung des zweiten Federelements kann die Befestigungsvorrichtung selbst dann noch relativ zu dem Trägerprofil positioniert werden, wenn die Spannschraube bereits leicht angezogen ist, um die beiden Klemmbacken an das Dachrelingprofil zu klemmen. Zu diesem Zweck ist das zweite Federelement entsprechend eingerichtet, beispielsweise indem eine Federkonstante des zweiten Federelements in Relation zu einer Federkonstante des ersten Federelements angepasst dimensioniert ist. Alternativ oder zusätzlich kann ein Hebelarm des zweiten Federelements angepasst dimensioniert sein.

Die Erfindung betrifft zudem eine Dachträgeranordnung für ein Kraftfahrzeug, aufweisend ein Trägerprofil und wenigstens eine Befestigungsvorrichtung gemäß der vorhergehenden Offenbarung. Vorzugsweise weist die Dachträgeranordnung zwei Befestigungsvorrichtungen auf, die jeweils gegenüberliegenden Enden des Trägerprofils zugeordnet und lösbar mit diesen verbindbar sind. In montiertem Zustand ist das Trägerprofil vorzugsweise entlang einer Querachse des Kraftfahrzeugs längserstreckt.

Die Erfindung betrifft zudem ein Kraftfahrzeug mit wenigstens einem Dachrelingprofil und einer Dachträgeranordnung gemäß der vorhergehenden Offenbarung. Vorzugsweise weist das Kraftfahrzeug zwei Dachrelingprofile auf, die entlang einer Querachse des Kraftfahrzeugs voneinander beabstandet fest auf dem Dach des Kraftfahrzeugs montiert sind. Die beiden Dachrelingprofile sind entlang der Längsachse des Kraftfahrzeugs längserstreckt. Die Dachträgeranordnung ist lösbar mit dem wenigstens einen Dachrelingprofil verbunden.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.

Es zeigen:
- Fig. 1: in perspektivischer Ansicht einen Abschnitt einer Ausführungsform einer erfindungsgemäßen Dachträgeranordnung mit einem Trägerprofil und einer Ausführungsform einer erfindungsgemäßen Befestigungsvorrichtung, die unter Ausbildung einer lösbaren Klemmverbindung mit einem Dachrelingprofil eines Kraftfahrzeugs verbunden ist,
- Fig. 2: der in Fig. 1 gezeigte Abschnitt der Dachträgeranordnung in einer schematischen Frontansicht,
- Fig. 3: die Dachträgeranordnung in einer der Fig. 2 entsprechenden Ansicht, wobei das Trägerprofil mitsamt eines lösbar mit demselben verbundenen Grundkörpers der Befestigungsvorrichtung um eine erste Schwenkachse verschwenkt ist,
- Fig. 4: in schematischer Perspektivansicht einen Abschnitt einer weiteren Ausführungsform einer erfindungsgemäßen Dachträgeranordnung mit einem Trägerprofil und einer weiteren Ausführungsform einer erfindungsgemäßen Befestigungsvorrichtung,
- Fig. 5: der in Fig. 4 gezeigte Abschnitt der Dachträgeranordnung in einem schematischen Querschnitt entlang einer Schnittlinie V-V gemäß Fig. 6,
- Fig. 6: die Dachträgeranordnung nach den Fig. 4 und 5 in einem Längsschnitt gemäß einer Schnittlinie VI-VI nach Fig. 5,
- Fig. 7: eine weitere Ausführungsform einer erfindungsgemäßen Dachträgeranordnung in einer der Fig. 5 entsprechenden Ansicht und
- Fig. 8: die Dachträgeranordnung nach Fig. 7 in einer Perspektivansicht.

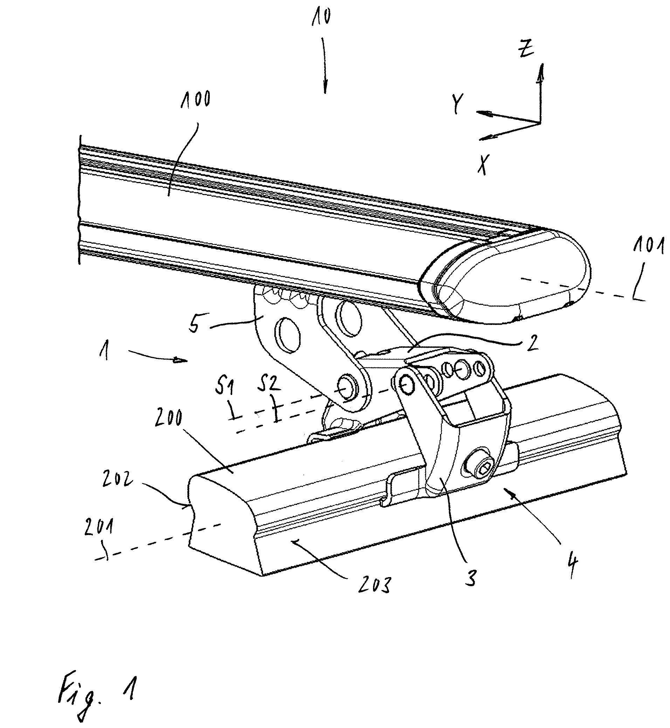

Ein Kraftfahrzeug weist gemäß Fig. 1 ein Dachrelingprofil 200 auf, das entlang einer Fahrzeuglängsachse X längserstreckt auf dem Dach des Kraftfahrzeugs montiert ist.

In Fig. 1 ist lediglich ein Längsabschnitt des Dachrelingprofils 200 gezeigt. Das Dachrelingprofil 200 erstreckt sich abseits des in Fig. 1 dargestellten Abschnitts im Wesentlichen über eine gesamte Länge des Dachs.

An dem Dachrelingprofil 200 ist eine Dachträgeranordnung 10 lösbar befestigt. Die Dachträgeranordnung 10 ist in Fig. 1 lediglich abschnittsweise dargestellt und weist ein Trägerprofil 100 und wenigstens eine Befestigungsvorrichtung 1 auf.

Das Trägerprofil 100 ist in montiertem Zustand entlang einer Querachse Y des Kraftfahrzeugs längserstreckt. Das Trägerprofil 100 ist zwischen einem ersten Ende, das vorliegend in Fig. 1 dargestellt ist, und einem nicht dargestellten zweiten Ende entlang seiner Längsachse 101 längserstreckt. Die Längsachse 101 des Trägerprofils 100 ist vorliegend parallel zur Querachse Y des Kraftfahrzeugs und damit auch orthogonal zu einer Längsachse 201 des Dachrelingprofils 200 längserstreckt.

Die Befestigungsvorrichtung 1 dient der lösbaren Befestigung des Trägerprofils 100 an dem Dachrelingprofil 200. Die Befestigungsvorrichtung 1 ist auf noch näher beschriebene Weise lösbar mit dem ersten Ende des Trägerprofils 100 verbunden.

Die Dachträgeranordnung 10 weist zudem eine weitere Befestigungsvorrichtung auf, die an dem vorliegend nicht näher gezeigten zweiten Ende des Trägerprofils 100 angeordnet und zur Befestigung an einem weiteren Dachrelingprofil des Kraftfahrzeugs vorgesehen ist. Das Dachrelingprofil 200 und das vorliegend nicht näher gezeigte weitere Dachrelingprofil sind auf eine dem Fachmann bekannte Weise entlang der Querachse Y des Kraftfahrzeugs voneinander beabstandet an dem Dach des Kraftfahrzeugs montiert.

Die Befestigungsvorrichtung 1 und die in Fig. 1 nicht gezeigte weitere Befestigungsvorrichtung sind hinsichtlich ihrer Gestaltung und Funktion identisch. Das nachfolgend zu der Befestigungsvorrichtung 1 Offenbarte gilt sinngemäß auch für die weitere, nicht gezeigte Befestigungsvorrichtung der Dachträgeranordnung 10.

Die Befestigungsvorrichtung 1 weist eine erste Klemmbacke 2, eine zweite Klemmbacke 3, eine Stelleinrichtung 4 und einen Grundkörper 5 auf.

Die erste Klemmbacke 2 ist zur Anlage an einer ersten Längsseite 202 des Dachrelingprofils 200 eingerichtet.

Die zweite Klemmbacke 3 ist zur Anlage an einer zweiten Längsseite 203 des Dachrelingprofils 200 eingerichtet. Die beiden Längsseiten 202, 203 liegen einander orthogonal zur Längsachse 201 des Dachrelingprofils 200 gegenüber.

Die erste Klemmbacke 2 und die zweite Klemmbacke 3 sind zueinander relativbeweglich zwischen einer Klemmstellung und einer Freigabestellung.

In den Fig. 1, 2 und 3 ist die Klemmstellung der Klemmbacken 2, 3 gezeigt. In der Klemmstellung sind die erste Klemmbacke 2 und die zweite Klemmbacke 3 aufeinander zubewegt, um eine Klemmverbindung mit dem Dachrelingprofil 200 auszubilden.

In der vorliegend nicht gezeigten Freigabestellung sind die erste Klemmbacke 2 und die zweite Klemmbacke 3 voneinander wegbewegt, um die Klemmverbindung mit dem Dachrelingprofil 200 aufzuheben.

Mit anderen Worten: Die erste Klemmbacke 2 und die zweite Klemmbacke 3 bilden eine Klemme zum Klemmen des Dachrelingprofils 200, wobei die Klemme in der Klemmstellung geschlossen (oder weniger weit geöffnet) und in der Freigabestellung geöffnet (oder weniger weit geschlossen) ist.

Die Stelleinrichtung 4 dient der stellbeweglichen Verlagerung der Klemmbacken 2, 3 zwischen der Klemmstellung und der Freigabestellung. Die Stelleinrichtung 4 ist bei der gezeigten Ausführungsform auf noch näher beschriebene Weise spezifisch gestaltet.

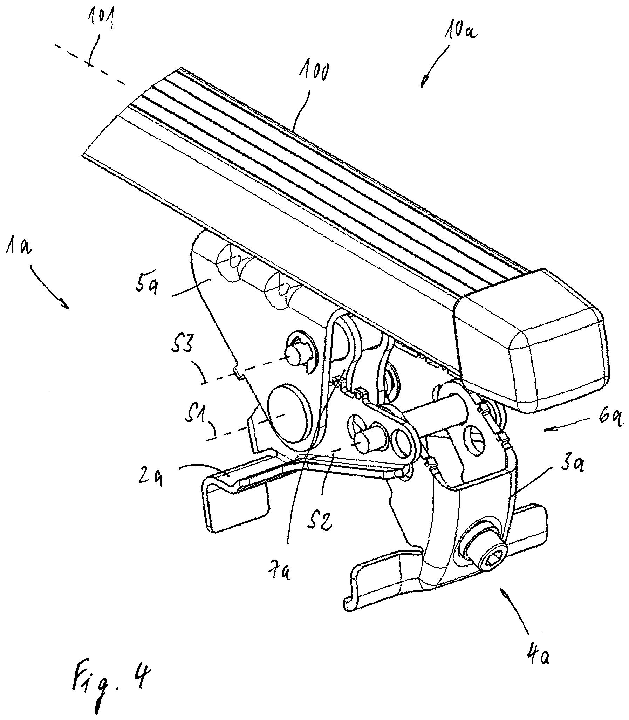

Der Grundkörper 5 ist in der in den Fig. 1 bis 3 gezeigten Konfiguration mit dem Trägerprofil 1 lösbar verbunden. Die lösbare Verbindung zwischen dem Grundkörper 5 und dem Trägerprofil 100 ist in den Fig. 1 bis 3 nicht näher spezifiziert und kann auf unterschiedliche Weise ausgeführt sein. Eine spezifische Art der lösbaren Verbindung wird nachfolgend noch näher unter Bezugnahme auf die in den Fig. 4 bis 6 gezeigte Ausführungsform erläutert.

Die erste Klemmbacke 2 und die zweite Klemmbacke 3 sind um eine gemeinsame erste Schwenkachse S1 relativ zu dem Grundkörper 5 schwenkbeweglich an dem Grundkörper 5 gelagert. Die erste Schwenkachse S1 ist entlang der Längsachse 201 des Dachrelingprofils 200 orientiert.

Mit anderen Worten: Die durch die erste Klemmbacke 2 und die zweite Klemmbacke 3 gebildete Klemme ist insgesamt relativ zu dem Grundkörper 5 um die erste Schwenkachse S1 schwenkbeweglich. Dies jedenfalls in der Freigabestellung, d. h. wenn die Klemme nicht an dem Dachrelingprofil 200 festgeklemmt ist. In der Klemmstellung ist der Grundkörper 5 mitsamt des Trägerprofils 100 um die erste Schwenkachse S1 relativ zu der Klemme, d. h. der ersten Klemmbacke 2 und der zweiten Klemmbacke 3, um die erste Schwenkachse S1 schwenkbeweglich. Diese Schwenkbeweglichkeit ist jedenfalls so lange gegeben, bis die weitere (in Fig. 1 nicht gezeigte Befestigungsvorrichtung) an dem weiteren Dachrelingprofil befestigt ist.

Die Schwenkbeweglichkeit um die erste Schwenkachse S1 erlaubt eine vereinfachte Befestigung der Dachträgeranordnung 10 am Kraftfahrzeug. Beispielsweise kann das Trägerprofil 100 zunächst an seinem in den Fig. 1 bis 3 gezeigten Ende mittels der Befestigungsvorrichtung 1 an dem Dachrelingprofil 200 befestigt werden. In diesem Zustand bleibt das Trägerprofil 100 um die erste Schwenkachse S1 schwenkbeweglich. Dies erlaubt eine vereinfachte Positionierung und Befestigung der weiteren Befestigungsvorrichtung an dem weiteren Dachrelingprofil. Zudem wird durch die Schwenkbeweglichkeit vermieden, dass ungewollte Längsmomente in das Dachrelingprofil bzw. die Dachrelingprofile eingeleitet werden. Durch die schwenkbewegliche Klemme ergibt sich zudem eine verbesserte Anlage der Klemmbacken 2, 3 an dem Dachrelingprofil 200.

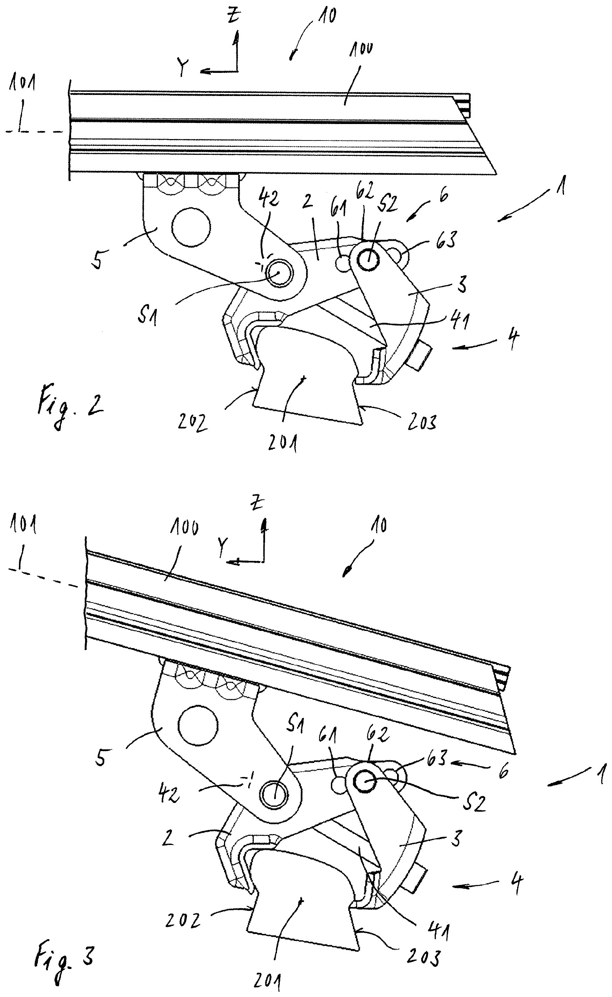

Bei der gezeigten Ausführungsform beträgt die Schwenkbeweglichkeit um die erste Schwenkachse in etwa ± 15°. Dabei ist in den Fig. 1 und 2 eine horizontale Ausrichtung des Trägerprofils 100 entlang der Querachse Y gezeigt. In Fig. 3 ist eine verschwenkte Konfiguration gezeigt, bei der das Trägerprofil 100 mitsamt des an ihm befestigten Grundkörpers 5 in etwa um 15° im Uhrzeigersinn um die erste Schwenkachse S1 relativ zu der Klemme, d. h. den beiden Klemmbacken 2, 3, verschwenkt ist.

Bei der in den Fig. 1 bis 3 gezeigten Ausführungsform sind die Klemmbacken 2, 3 zwecks Verlagerung zwischen der Klemmstellung und der Freigabestellung relativ zueinander schwenkbeweglich. Zu diesem Zweck ist eine zweite Schwenkachse S2 vorgesehen. Die zweite Schwenkachse S2 ist parallel zu der ersten Schwenkachse S1.

Vorliegend ist die erste Klemmbacke 2 schwenkbeweglich um die erste Schwenkachse S1 unmittelbar an dem Grundkörper 5 gelagert. Die zweite Klemmbacke 3 ist um die zweite Schwenkachse S2 schwenkbeweglich unmittelbar an der ersten Klemmbacke 2 gelagert. Eine Schwenkbewegung der ersten Klemmbacke 2 um die erste Schwenkachse S1 bewirkt folglich gleichzeitig auch eine entsprechende Schwenkbewegung der zweiten Klemmbacke 3. Mit anderen Worten: Die erste Klemmbacke 2 und die zweite Klemmbacke 3 sind gemeinsam um die erste Schwenkachse S1 relativ zu dem Grundkörper 5 schwenkbeweglich.

Zum Öffnen und Schließen der durch die beiden Klemmbacken 2, 3 gebildeten Klemme wird die zweite Klemmbacke 3 um die zweite Schwenkachse S2 relativ zu der ersten Klemmbacke 1 verschwenkt.

Die zweite Schwenkachse S2 ist in radialer Richtung der ersten Schwenkachse S1 in einem Radialabstand von der ersten Schwenkachse S1 angeordnet. Dieser Radialabstand ist vorliegend wahlweise einstellbar. Zwecks Einstellung des Radialabstands ist eine Einstelleinrichtung 6 vorhanden.

Die Einstelleinrichtung 6 weist bei der in den Fig. 1 bis 3 gezeigten Ausführungsform mehrere Lagerstellen 61, 62, 63 auf, die in unterschiedlichen Radialabständen von der ersten Schwenkachse S1 an der ersten Klemmbacke 2 und/oder der zweiten Klemmbacke 3 angeordnet sind. Die Lagerstellen 61, 62, 63 werden auch als erste Lagerstelle 61, zweite Lagerstelle 62 und dritte Lagerstelle 63 bezeichnet. Dabei ist die erste Lagerstelle 61 in einem ersten Radialabstand, die zweite Lagerstelle 62 in einem zweiten Radialabstand und die dritte Lagerstelle 63 in einem dritten Radialabstand von der ersten Schwenkachse S1 angeordnet.

Die Lagerstellen 61, 62, 63 sind jeweils zur wahlweisen Schwenklagerung der zweiten Klemmbacke 3 an der ersten Klemmbacke 1 eingerichtet.

In der in den Fig. 1 bis 3 gezeigten Konfiguration ist die zweite Klemmbacke 3 an der zweiten Lagerstelle 62 schwenkbeweglich an der ersten Klemmbacke 2 gelagert. Die zweite Schwenkachse S2 ist demnach in dem zweiten Radialabstand von der ersten Schwenkachse S1 angeordnet. Der zweite Radialabstand liegt betragsmäßig zwischen dem ersten Radialabstand und dem zweiten Radialabstand. Zur Verringerung des Radialabstands kann die zweite Schwenkachse S2 an der ersten Lagerstelle 61 angeordnet werden. Zur Vergrößerung des Radialabstands kann eine Lagerung an der dritten Lagerstelle 63 vorgenommen werden.

Die Einstellung des Radialabstands kann fertigungsseitig bei der Herstellung der Befestigungsvorrichtung 1 und/oder durch einen Benutzer der Dachträgeranordnung 10 vorgenommen werden.

Durch die Einstellbarkeit des Radialabstands kann die Kinematik der Klemmbacken 2, 3 bei der Verlagerung zwischen der Klemmstellung und der Freigabestellung in weiter verbesserter Weise an eine Geometrie des Dachrelingprofils 200 angepasst werden. Durch die Einstellung des Radialabstands können zudem Hebelverhältnisse und damit einhergehende Kräfte und/oder Momente der Befestigungsvorrichtung 1 an eine spezifische Geometrie des Dachrelingprofils 200 angepasst werden.

Bei der Ausführungsform nach den Fig. 1 bis 3 weist die Stelleinrichtung 4 eine Spannschraube 41 und eine Gewindemutter 42 auf, wobei die Gewindemutter 42 in den Fig. 1 bis 3 durch den Grundkörper 5 verdeckt ist. Die Spannschraube 41 ist vorliegend an der zweiten Klemmbacke 3 abgestützt und mit der Gewindemutter 42 verschraubt. Die Gewindemutter 42 steht in Axialrichtung der Spannschraube 41 relativ zu der ersten Klemmbacke 2 fest. Zu diesem Zweck kann die Gewindemutter 42 wenigstens mittelbar mit der ersten Klemmbacke 2 verbunden sein.

Um die durch die Klemmbacken 2, 3 gebildete Klemme zu schließen, wird die Spannschraube 41 angezogen. Durch das Anziehen der Spannschraube 41 werden die zum Ausbilden der Klemmverbindung mit dem Dachrelingprofil 200 erforderlichen Klemmkräfte erzeugt. Zum Öffnen der Klemme wird die Spannschraube 41 gelöst. Durch Anziehen der Spannschraube 41 wird die zweite Klemmbacke 3 relativ zu der ersten Klemmbacke 2 im Uhrzeigersinn um die zweite Schwenkachse S2 verschwenkt, wodurch die Klemme sich schließt. Ein Lösen der Spannschraube 41 erlaubt eine Verlagerung entgegen dem Uhrzeigersinn und damit ein Öffnen der Klemme.

Es versteht sich, dass die Klemme mittels einer Vorspanneinrichtung in Richtung der Freigabestellung oder der Klemmstellung vorgespannt sein kann. Die Vorspanneinrichtung kann eine Drehfeder, eine Spiralfeder oder ein sonstiges elastisches Element aufweisen, das ein um die zweite Schwenkachse wirkendes Drehmoment bewirkt. Die Vorspanneinrichtung ist aus zeichnerischen Gründen nicht gezeigt.

Bei der gezeigten Ausführungsform schneidet eine Längsachse der Spannschraube 41 die erste Schwenkachse S1. Die Längsachse der Spannschraube 41 ist orthogonal zu der ersten Schwenkachse S1 und damit auch der zweiten Schwenkachse S2 ausgerichtet.

In den Fig. 4 bis 8 sind weitere Ausführungsformen erfindungsgemäßer Dachträgeranordnungen 10a, 10b abschnittsweise gezeigt. Die Dachträgeranordnungen 10a, 10b weisen wiederum ein Trägerprofil 100 und wenigstens eine Befestigungsvorrichtung 1a, 1b auf. Die Befestigungsvorrichtungen 1a, 1b ist hinsichtlich ihrer Gestaltung und Funktion im Wesentlichen identisch mit der Befestigungsvorrichtung 1 der Dachträgeranordnung 10 nach den Fig. 1 bis 3. Das zu der Befestigungsvorrichtung 1 Offenbarte gilt mutatis mutandis auch für die Befestigungsvorrichtungen 1a, 1b, sofern nichts anderes beschrieben ist. Zur Vermeidung von Wiederholungen wird daher nachfolgend ausdrücklich auf das zu der Befestigungsvorrichtung 1 Offenbarte verwiesen und Bezug genommen. Es werden lediglich wesentliche Unterschiede der Befestigungsvorrichtungen 1a, 1b gegenüber der Befestigungsvorrichtung 1 erläutert. Funktionsgleiche Bauteile und/oder Abschnitte sind mit identischen Bezugszeichenziffern unter Hinzufügung von Kleinbuchstaben gekennzeichnet.

Wesentlicher Unterschied der Befestigungsvorrichtung 1a ist eine spezifische Gestaltung zwecks lösbarer Befestigung mit dem Trägerprofil 100. Hierfür weist die Befestigungsvorrichtung 1a einen Klemmhebel 7a auf.

Der Klemmhebel 7a ist um eine dritte Schwenkachse S3 relativ zu dem Grundkörper 5a schwenkbeweglich an dem Grundkörper 5a gelagert.

Die dritte Schwenkachse S3 ist parallel zu der ersten Schwenkachse S1 und damit auch der zweiten Schwenkachse S2.

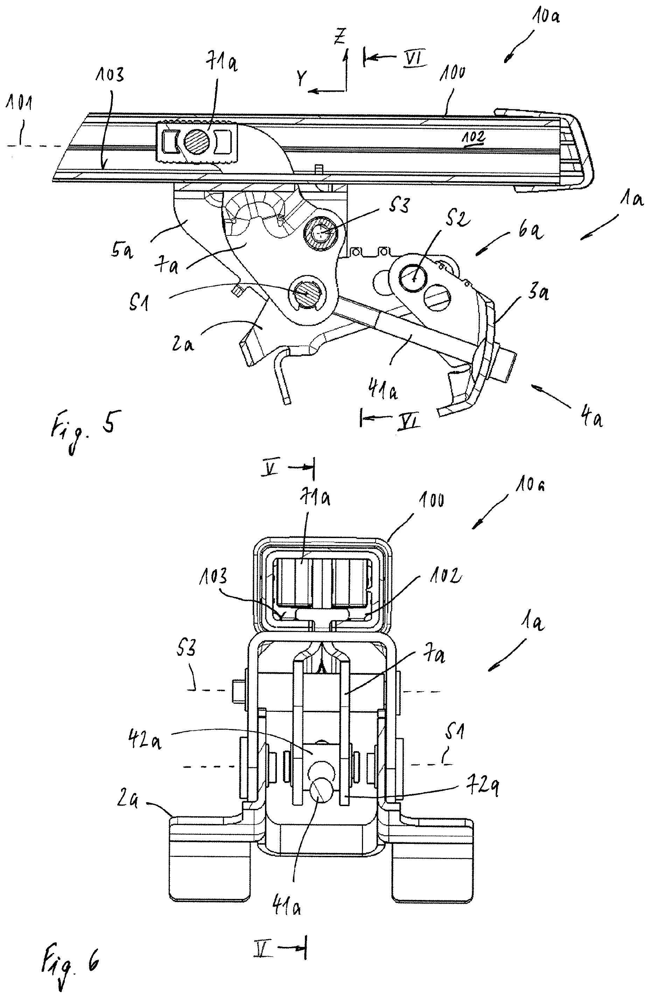

Der Klemmhebel 7a ist mittels der Stelleinrichtung 4a um die dritte Schwenkachse S3 schwenkbeweglich, um eine lösbare Klemmverbindung mit dem Trägerprofil 100 auszubilden. Der Klemmhebel 7a weist einen Kopfabschnitt 71a auf, der zwecks Verbindung mit dem Trägerprofil 100 in einen Hohlprofilquerschnitt 102 des Trägerprofils 100 eingreift (siehe Fig. 5, 6).

Der Kopfabschnitt 71a kann mittels einer Schwenkbewegung des Klemmhebels 7a um die dritte Schwenkachse S3 gegen eine Innenbodenfläche 103 des Trägerprofils 100 gepresst werden, um das Trägerprofil 100 entlang der Hochachse Z von oben nach unten auf den Grundkörper 5a zu pressen. Durch dieses Aufpressen wird die besagte Klemmverbindung mit der Trägerprofil 100 ausgebildet.

Die zum Ausbilden der Klemmverbindung mit dem Trägerprofil 100 erforderlichen Klemmkräfte werden bei der in den Fig. 4 bis 6 gezeigten Ausführungsform mittels der Stelleinrichtung 4a erzeugt, im Speziellen mittels der Spannschraube 41a.

Zu diesem Zweck ist die Gewindemutter 42a vorliegend an dem Klemmhebel 7a festgelegt. Durch Anziehen der Spannschraube 41 wird der Klemmhebel 7a entgegen dem Uhrzeigersinn um die dritte Schwenkachse S3 relativ zu dem Grundkörper 5a verschwenkt. Gleichzeitig wird, wie bereits im Zusammenhang mit der Ausführungsform nach den Fig. 1 bis 3 erläutert, die durch die Klemmbacken 2a, 3a gebildete Klemme geschlossen.

Die Gewindemutter 42a ist bei der gezeigten Ausführungsform an einem Fußabschnitt 72a des Klemmhebels 7a gelagert. Der Fußabschnitt 72a ist dem Kopfabschnitt 71a in Längsrichtung des Klemmhebels 7a abgewandt. Die Gewindemutter 42a ist vorliegend um eine Schwenkachse (ohne Bezugszeichen) schwenkbeweglich an dem Fußabschnitt 72a gelagert. Diese Schwenkachse ist in der in den Fig. 4 bis 6 gezeigten Konfiguration koaxial mit der ersten Schwenkachse S1. Mit zunehmender Verlagerung in die Klemmstellung wird der Fußabschnitt 72a in Bezug auf die Zeichenebene der Fig. 5 relativ zu der ersten Schwenkachse S1 entgegen dem Uhrzeigersinn um die dritte Schwenkachse S3 verlagert. Die Schwenkachse der Gewindemutter 42a ist dann nicht mehr vollständig koaxial mit der ersten Schwenkachse S1. Die schwenkbewegliche Lagerung der Gewindemutter 42a dient dem Ausgleich der sich verändernden Längsneigung der Spannschraube 41a bei der Verlagerung der Klemme zwischen der Klemmstellung und der Freigabestellung.

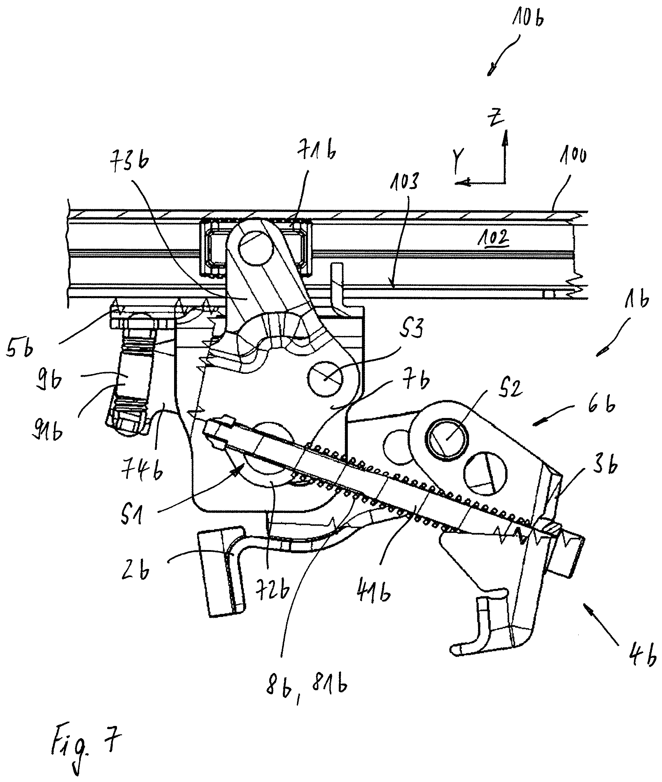

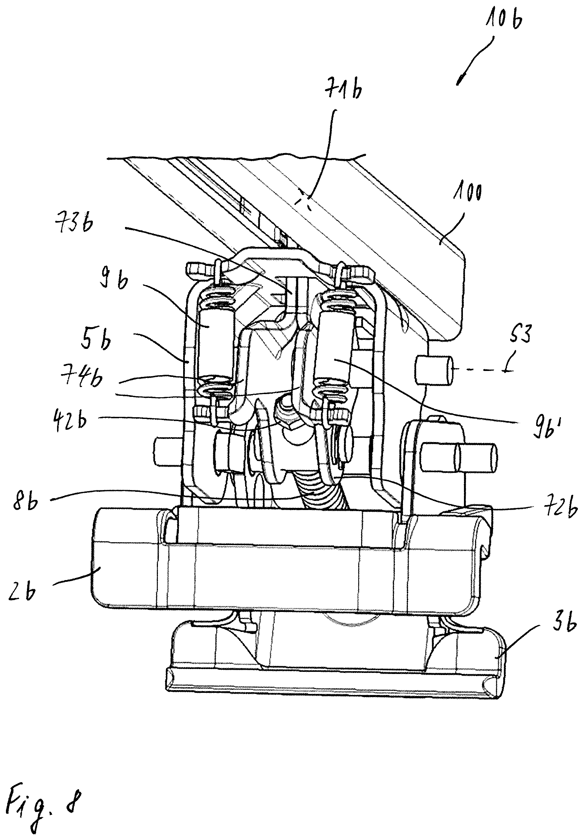

Die Befestigungsvorrichtung 1b nach den Fig. 7 und 8 unterscheidet sich im Wesentlichen dadurch von der Befestigungsvorrichtung 1a nach den Fig. 4 bis 6, dass wenigstens ein erstes Federelement 8b und wenigstens ein zweites Federelement 9b vorhanden sind.

Das erste Federelement 8b dient dazu, die beiden Klemmbacken 2b, 3b in Richtung der Freigabestellung vorzuspannen. Zum Verlagern der Klemmbacken 2b, 3b in die Klemmstellung muss der Benutzer beim Anziehen der Spannschraube 41b gegen die Federkraft des ersten Federelements 8b anarbeiten. Bei der gezeigten Ausführungsform ist das erste Federelement 8b eine Druckfeder, im Speziellen eine auf Druck wirkende Wendelfeder 81b.

Das erste Federelement 8b, im Speziellen die Wendelfeder 81b, ist vorliegend koaxial zu der Spannschraube 41b auf deren Außenumfang angeordnet. Einends ist die Wendelfeder 81b gegen eine Innenseite der zweiten Klemmbacke 3b abgestützt. Andernends erfolgt die Abstützung vorliegend gegen den Fußabschnitt 72b des Klemmhebels 7b.

Das wenigstens eine zweite Federelement 9b dient dazu, den Klemmhebel 7b um die dritte Schwenkachse S3 in Richtung einer Freigabestellung vorzuspannen, in welcher der Kopfabschnitt 71b von dem Trägerprofil 100, genauer: der Innenbodenfläche 103, abgehoben ist. In der Freigabestellung des Klemmhebels 7b kann die Befestigungsvorrichtung 1b entlang der Längsachse des Trägerprofils 100 positioniert werden.

Bei der gezeigten Ausführungsform sind zwei zweite Federelemente 9b, 9b' vorhanden, die in Bezug auf die Zeichenebene der Fig. 8 auch als linkes zweites Federelement 9b und rechtes zweites Federelement 9b' bezeichnet werden können. Die beiden zweiten Federelemente 9b, 9b' sind vorliegend jeweils als Zugfeder 91b gestaltet und einends mit dem Klemmhebel 7b und andernends mit dem Grundkörper 5b zugkraftübertragend verbunden.

Bei der gezeigten Ausführungsform weist der Klemmhebel 7b einen Halsabschnitt 73b auf, an dessen oberem Ende der Kopfabschnitt 71b angeordnet ist. Der Halsabschnitt 73b geht in zwei entlang der Längsachse X einander gegenüberliegende Wangenabschnitte 72b über, an denen jeweils eines der beiden zweiten Federelemente 9b, 9b' festgelegt ist.

Ausgehend von der in Fig. 7 gezeigten Konfiguration wird zum Anbringen der Befestigungsvorrichtung 1b die Spannschraube 41b angezogen. Hierdurch werden die Klemmbacken 2b, 3b ausgehend von der Freigabestellung in Richtung der Klemmstellung an das Dachrelingprofil (in Fig. 7 und 8 nicht gezeigt) angelegt. Das Anziehen der Spannschraube 41b erzeugt gleichzeitig ein auf den Klemmhebel 7b wirkendes Drehmoment entgegen dem Uhrzeigersinn um die dritte Schwenkachse S3. Das wenigstens eine zweite Federelement 9b wirkt diesem Drehmoment entgegen und hält den Klemmhebel 7b zunächst in der in Fig. 7 gezeigten Freigabestellung. Mit anderen Worten: Der Kopfabschnitt 71b bleibt zunächst von der Innenbodenfläche 103 abgehoben, obwohl die Klemmbacken 2b, 3b bereits an das Dachrelingprofil angelegt, aber noch nicht vollständig festgeklemmt sind. Dies aufgrund der Einwirkung des wenigstens einen zweiten Federelements 9b. Erst ein weitergehendes Anziehen der Spannschraube 41b bewirkt, dass der Klemmhebel 7b entgegen der Federwirkung des wenigstens einen Federelements 9b mit dem Trägerprofil 100 unter Ausbildung der Klemmverbindung in Kontakt gelangt. Hierdurch können die Befestigungsvorrichtung 1b und das Trägerprofil 100 auch dann noch relativ zueinander positioniert werden, wenn die Klemmbacken 2b, 3b bereits an das Dachrelingprofil 200 angelegt sind. Angelegt meint, dass bereits ein Kontakt vorliegt, aber noch keine vollständige Klemmverbindung, wie sie im Betrieb ausgebildet ist.

## Patentansprüche

1. Befestigungsvorrichtung (1, 1a, 1b) zum Befestigen eines Trägerprofils (100) an einem Dachrelingprofil (200) eines Kraftfahrzeugs, aufweisend
eine erste Klemmbacke (2, 2a, 2b) und eine zweite Klemmbacke (3, 3a, 3b), die zur Anlage an gegenüberliegenden Längsseiten (202, 203) des Dachrelingprofils (200) eingerichtet und zueinander relativbeweglich sind zwischen einer Klemmstellung, in der die Klemmbacken (2, 3; 2a, 3a; 2b, 3b) zum Ausbilden einer Klemmverbindung mit dem Dachrelingprofil (200) aufeinander zubewegt sind, und einer Freigabestellung, in der die Klemmbacken (2, 3; 2a, 3a; 2b, 3b) zum Aufheben der Klemmverbindung voneinander wegbewegt sind,
eine Stelleinrichtung (4, 4a, 4b), mittels derer die Klemmbacken (2, 3; 2a, 3a; 2b, 3b) zwischen der Klemmstellung und der Freigabestellung verlagerbar sind,
und einen Grundkörper (5, 5a, 5b), der mit dem Trägerprofil (100) verbindbar ist und an welchem die Klemmbacken (2, 3; 2a, 3a; 2b, 3b) gelagert sind,
**dadurch gekennzeichnet, dass** die erste Klemmbacke (2, 2a, 2b) und die zweite Klemmbacke (3, 3a, 3b) um eine gemeinsame erste Schwenkachse (S1) relativ zu dem Grundkörper (5, 5a, 5b) schwenkbeweglich an dem Grundkörper (5, 5a, 5b) gelagert sind, wobei die erste Schwenkachse (S1) in einem an dem Dachrelingprofil (200) befestigten Zustand entlang einer Längsachse (201) des Dachrelingprofils (200) orientiert ist.

2. Befestigungsvorrichtung (1, 1a, 1b) nach Anspruch 1, wobei die Schwenkbeweglichkeit der Klemmbacken (2, 3; 2a, 3a; 2b, 3b) um die erste Schwenkachse (S1) wenigstens ± 5°, bevorzugt wenigstens ± 10°, besonders bevorzugt wenigstens ± 15°, beträgt.

3. Befestigungsvorrichtung (1, 1a, 1b) nach Anspruch 1 oder 2, wobei die zweite Klemmbacke (3, 3a, 3b) zwecks Verlagerung zwischen der Klemmstellung und der Freigabestellung um eine zweite Schwenkachse (S2), die parallel zu der ersten Schwenkachse (S1) ist, relativ zu der ersten Klemmbacke (2, 2a, 2b) schwenkbeweglich an der ersten Klemmbacke (2, 2a, 2b) gelagert ist, und wobei die erste Klemmbacke (2, 2a, 2b) gemeinsam mit der an ihr gelagerten zweiten Klemmbacke (3, 3a, 3b) um die erste Schwenkachse (S1) relativ zu dem Grundkörper (5, 5a, 5b) schwenkbeweglich an dem Grundkörper (5, 5a, 5b) gelagert ist.

4. Befestigungsvorrichtung (1, 1a, 1b) nach Anspruch 3, wobei die zweite Schwenkachse (S2) in radialer Richtung der ersten Schwenkachse (S1) in einem Radialabstand zu der ersten Schwenkachse (S1) angeordnet ist, und wobei eine Einstelleinrichtung (6, 6a) zum wahlweisen Einstellen des Radialabstands vorhanden ist.

5. Befestigungsvorrichtung (1, 1a, 1b) nach Anspruch 4, wobei die Einstelleinrichtung (6, 6a, 6b) mehrere Lagerstellen (61, 62, 63) aufweist, die in unterschiedlichen Radialabständen von der ersten Schwenkachse (S1) an der ersten Klemmbacke (2, 2a, 2b) und/oder der zweiten Klemmbacke (3, 3a, 3b) angeordnet und jeweils eingerichtet sind zur wahlweisen Schwenklagerung der zweiten Klemmbacke (3, 3a, 3b) um die zweite Schwenkachse (S2).

6. Befestigungsvorrichtung (1a, 1b) nach einem der vorhergehenden Ansprüche, weiter aufweisend einen Klemmhebel (7a, 7b), der um eine dritte Schwenkachse (S3) relativ zu dem Grundkörper (5a, 5b) schwenkbeweglich an dem Grundkörper (5a, 5b) gelagert ist, wobei die dritte Schwenkachse (S3) parallel zu der ersten Schwenkachse (S1) ist, und wobei der Klemmhebel (7a, 7b) mittels der Stelleinrichtung (4a, 4b) um die dritte Schwenkachse (S3) schwenkbeweglich ist, um eine Klemmverbindung mit dem Trägerprofil (100) auszubilden.

7. Befestigungsvorrichtung (1a, 1b) nach Anspruch 6, wobei der Klemmhebel (7a, 7b) einen Kopfabschnitt (71a, 71b) aufweist, der in einem mit dem Trägerprofil (100) verbundenen Zustand in einem Hohlprofilquerschnitt (102) des Trägerprofils (100) eingreift und mittels einer Schwenkbewegung des Klemmhebels (7a, 7b) um die dritte Schwenkachse (S3) gegen eine Innenbodenfläche (103) des Trägerprofils (100) gepresst ist, um die Klemmverbindung mit dem Trägerprofil (100) auszubilden.

8. Befestigungsvorrichtung (1, 1a, 1b) nach einem der vorhergehenden Ansprüche, wobei die Stelleinrichtung (4, 4a, 4b) eine Spannschraube (41, 41a, 41b) aufweist, die an der zweiten Klemmbacke (3, 3a, 3b) abgestützt ist und mit einer Gewindemutter (42, 42a, 42b) zusammenwirkt, um die zweite Klemmbacke (3, 3a, 3b) um die zweite Schwenkachse (S2) relativ zu der ersten Klemmbacke (2, 2a, 2b) zu verlagern und um Klemmkräfte zum Ausbilden der Klemmverbindung mit dem Dachrelingprofil (200) zu erzeugen.

9. Befestigungsvorrichtung (1a, 1b) nach Anspruch 8 in Kombination mit Anspruch 6 oder 7, wobei die Gewindemutter (42a, 42b) an dem Klemmhebel (7a, 7b), insbesondere einen Fußabschnitt (72a, 72b) des Klemmhebels (7a, 7b), festgelegt ist, wodurch zum Ausbilden der Klemmverbindung mit dem Trägerprofil (100) erforderliche Klemmkräfte mittels der Spannschraube (41a, 41b) erzeugbar sind.

10. Befestigungsvorrichtung (1b) nach einem der Ansprüche 6 bis 9, weiter aufweisend wenigstens ein erstes Federelement (8b), mittels dessen die Klemmbacken (2b, 3b) in Richtung der Freigabestellung vorgespannt sind, und wenigstens ein zweites Federelement (9b), mittels dessen der Klemmhebel (7b) um die dritte Schwenkachse (S3) in Richtung einer von dem Trägerprofil (100) gelösten Freigabestellung vorgespannt ist.

11. Befestigungsvorrichtung (1b) nach Anspruch 10 in Kombination mit Anspruch 9, wobei das wenigstens eine zweite Federelement (9b) dazu eingerichtet ist, den Klemmhebel (7b) entgegen der Einwirkung der Spannschraube (41b) in der Freigabestellung zu halten, während die Klemmbacken (2b, 3b) mittels der Spannschraube (41b) in Richtung der Klemmstellung verlagert werden.

12. Dachträgeranordnung (10, 10a, 10b) mit einem Trägerprofil (100) und wenigstens einer Befestigungsvorrichtung (1, 1a, 1b) nach einem der vorhergehenden Ansprüche.

13. Kraftfahrzeug mit wenigstens einem Dachrelingprofil (200) und einer Dachträgeranordnung (10, 10a, 10b) nach Anspruch 12.
